# EUROPÄISCHE PATENTANMELDUNG

(11) **EP 3 747 732 A1**
(43) Veröffentlichungstag der Anmeldung: **09.12.2020**
(21) Anmeldenummer: 19000273.3
(22) Anmeldetag: 05.06.2019
(51) Int. Cl.: B62D 1/12, A63B 55/60

(54) **GOLFTROLLEY**

(71) Anmelder: Ganser, Peter, 76359 Marxzell Burbach (DE)
(72) Erfinder: Ganser, Peter, 76359 Marxzell Burbach (DE)
(74) Vertreter: mepat Patentanwälte

(57) **Zusammenfassung**

Die vorliegende Erfindung stellt einen elektromotorisch angetriebenen Golftrolley und ein Verfahren zu dessen Steuerung bereit. Der Golftrolley weist eine Lenkvorrichtung auf, die mit einem Führgestänge (2) gekoppelt ist, an dem ein Griffstück (4) um eine Rotationsachse (X) drehbar und entlang der Rotationsachse (X) translatorisch verschiebbar angeordnet ist. Er weist ferner eine Steuerungseinheit zur Steuerung des elektromotorischen Antriebs auf, die mit der Lenkvorrichtung operativ gekoppelt ist. Mit dem das Griffstück (4) ist ein Magnet (20) unbeweglich verbunden. Das Führgestänge (2) hat einen Magnetfeldsensor, der dazu ausgebildet ist, eine Drehung um die Rotationsachse (X) und/oder eine translatorische Verschiebung entlang der Rotationsachse (X) des Griffstücks (4) über eine örtliche Änderung eines Magnetfeldes des Magneten (20) quantitativ zu erfassen und an die Steuerungseinheit zu übertragen. Die Steuerungseinheit weist eine Auswerteeinheit auf, in der zu der erfassten Drehung und/oder translatorischen Verschiebung des Griffstücks (4) korrespondierende Steuerungssignale festgelegt sind.

## Beschreibung

Die Erfindung betrifft einen Golftrolley und ein Verfahren für dessen Steuerung.

Golftrolleys werden dazu eingesetzt, Taschen mit Golfschlägern und weiteres Zubehör auf Golfplätzen von Ort zu Ort zu transportieren, indem der Benutzer den Golftrolley an einem Handgriff anfasst, um ihn zu seinem nächsten Abschlagspunkt zu verfahren. Dabei wird der Golftrolley gezogen oder geschoben, während der Benutzer nebenher geht. Um den Transport weiter zu erleichtern, werden solche Golftrolleys häufig motorisiert angetrieben. Zum Lenken wird der Golftrolley in die gewünschte Richtung geschoben oder gezogen.

Aus dem Stand der Technik sind Steuerungen von motorisierten Golftrolleys mit vereinfachten Handhabungsmöglichkeiten bekannt. Die DE 203 07 742 U1 beschreibt einen Golftrolley, der einen Drehgriff am oberen Teil eines Gestänges hat, das die Taschenauflage bildet. Der Drehgriff dient als Mittel zur Steuerung der Geschwindigkeit und ist elektrisch mit der Steuereinheit verbunden.

Aus DE 20 2007 005 290 U1 ist ferner bekannt, eine manuell betätigbare Steuereinrichtung an einer Lenkerstange anzuordnen, die Schalter für die Geradeausfahrt und eine elektrisch-elektronische Lenkschalteinrichtung zur Erzeugung von Lenksignalen aufweist, über die die Drehzahlen der Antriebsräder eingestellt werden.

Die EP 2 644 232 B1 schlägt vor, die Relativbewegungen eines Signalgebers gegenüber einem Signalsensor an einem Griff zu erfassen und an eine Auswerteeinheit zu senden, die die Eingangssignale in Steuersignale für die Antriebe der Räder wandelt.

Ausgehend von diesem Stand der Technik ist es Aufgabe der vorliegenden Erfindung, einen verbesserten Golftrolley bereitzustellen, der eine einfache, zuverlässige und intuitive Ein-Hand-Bedienung und -Lenkung ermöglicht.

Diese Aufgabe wird durch einen Golftrolley mit den Merkmalen des Anspruchs 1 gelöst.

Die weitere Aufgabe, einen Golftrolley einfach und intuitiv anzusteuern, wird durch das Verfahren mit den Merkmalen des unabhängigen Anspruchs 8 gelöst.

Weiterbildungen des Golftrolleys und des Verfahrens sind in den Unteransprüchen ausgeführt.

Nach einer ersten Ausführungsform des erfindungsgemäßen elektromotorisch angetriebenen Golftrolleys hat dieser eine Lenkvorrichtung, die mit einem Führgestänge, an dem ein Griffstück um eine Rotationsachse drehbar und entlang der Rotationsachse translatorisch verschiebbar angeordnet ist, gekoppelt ist. Er weist eine Steuerungseinheit zur Steuerung des elektromotorischen Antriebs auf, die mit der Lenkvorrichtung operativ verbunden ist. Das Griffstück weist erfindungsgemäß einen unbeweglich mit dem Griffstück verbundenen Magneten auf, der naturgemäß ein Magnetfeld hat. Ferner weist das Führgestänge einen Magnetfeldsensor auf, der dazu ausgebildet ist, eine Drehung um die Rotationsachse und/oder eine translatorische Verschiebung entlang der Rotationsachse des Griffstücks über eine örtliche Änderung des Magnetfeldes des Magneten quantitativ zu erfassen und an die Steuerungseinheit zu übertragen. Die Steuerungseinheit weist eine Auswerteeinheit auf, in der zu der erfassten Drehung und/oder translatorischen Verschiebung des Griffstücks korrespondierende Steuerungssignale festgelegt sind.

Als Golftrolley (im Folgenden auch kurz Trolley genannt) werden hierin mit Rollen oder Rädern versehene Transporthilfsmittel, hier "Handwagen", verstanden, die hauptsächlich auf Golfplätzen zum Transport der Sportausrüstung eingesetzt werden, wobei die bedienende Person anders als bei einem Golfcart oder Golfwagen nicht darauf aufsitzt, sondern davor, daneben oder hinterher geht.

"Operativ verbunden" meint hierin dazu ausgebildet, eine Handlung auszulösen, bzw. eine Wirkung zu erzeugen.

Der Magnet ist unbeweglich an oder in dem Griffstück angeordnet, d. h. der Magnet bewegt sich in gleichem Maße mit, wenn das Griffstück rotiert oder verschoben wird.

Der Magnet weist ein zugehöriges Magnetfeld auf, wobei eine örtliche Änderung des Magnetfeldes eintritt, wenn das Griffstück um die Rotationsachse gedreht und/oder entlang der Rotationsachse translatorisch verschoben wird. Der Magnetfeldsensor, der demgegenüber unbeweglich an dem Führgestänge angeordnet ist, kann über die jeweilige Magnetfeldänderung eine Änderung der Lage des Magneten und damit des Griffstücks erfassen. Wenn keine Änderung erfasst wird, kann entsprechend auf das Vorliegen der zuvor erfassten Position und damit ebenfalls auf die Auslenkung des Griffstücks geschlossen werden.

Der Begriff "Magnetfeldsensor" wird hierin im Übrigen so verstanden, dass er neben der eigentlichen sensorischen Erfassung auch all diejenigen Komponenten aufweisen kann, die dazu nötig sind, dass der erfasste Messwert ausgegeben bzw. weitergeleitet werden kann, wozu der Magnetfeldsensor bspw. als Teil eines Schaltkreises fungieren kann oder eine eigene Sendeeinheit zur Datenübertragung aufweist.

Somit kann der durch den Magnetfeldsensor erfasste Messwert, der einer bestimmten Auslenkung des Griffstücks entspricht, an die Steuerungseinheit übertragen werden.

Die Steuerungsfunktion kann vorteilhaft ohne elektrische Verbindungen realisiert werden, d. h. das Griffstück benötigt keine elektrischen Verbindungen zur Steuereinheit oder gar zur Energieversorgung des Antriebs.

Das Steuerungssignal kann eine Änderung der Geschwindigkeit (inkl. Änderung von vorwärts nach rückwärts), eine Richtungsänderung des Trolleys oder das Aufrechterhalten der aktuell vorliegenden Bewegung, und auch Stillstand umfassen. Dieses Signal wird Ober die Verbindung der Steuerungseinheit mit dem Antrieb bzw. der Lenkung umgesetzt.

In einer für Golftrolleys üblichen Ausführungsweise erstreckt sich das Führgestänge, das aus einer einzigen Lenkstange oder mehreren Lenkstangen, die sich zu einem Lenkbügel vereinigen können, bestehen kann, von der Achsaufhängung der Räder bis zu einer Höhe, die von einer stehenden Person bequem gegriffen werden kann.

Vorteilhaft wird mit dem erfindungsgemäßen Trolley eine vollständige Bedienbarkeit mit einer Hand ermöglicht. Sämtliche Bewegungsänderungen, d. h. sowohl Änderungen der Geschwindigkeit, als auch Änderungen der Bewegungsrichtung, können durch minimale Auslenkungen des Griffstücks eingeleitet werden. Durch das Erfassen der Auslenkung des Griffstücks und Weiterleiten des Messwertes kann dieser in der Steuerungseinheit in ein Steuerungssignal gewandelt werden, das an der Lenkung bzw. dem Antrieb des Golftrolleys angreift, um eine entsprechende Änderung zu bewirken.

Dabei ist mit einer Änderung der Geschwindigkeit auch eine Änderung zwischen "Vorwärtsfahrt" und "Rückwärtsfahrt" umfasst, wobei die Festlegung der Richtungen als "vorwärts" und als "rückwärts" im Grunde beliebig ist. In der Regel ist als Vorwärtsrichtung die Richtung zu verstehen, in der der Golftrolley fährt, wenn die bedienende Person hinterher geht. Als Richtungsänderung hingegen wird ein Abweichen von dieser Bewegungsachse verstanden, für die der Trolley gelenkt werden muss.

Damit kann auf alternative Bedienelemente wie Schalter oder Knöpfe zum Einstellen der Bewegung und der Geschwindigkeit verzichtet werden, sodass ein Erlernen der Funktionen solcher Schalter entfällt und Bedienfehler durch Verwechseln der Funktionen reduziert werden.

Ebenfalls vorteilhaft ist, dass kein nennenswerter Kraftaufwand erforderlich ist, um die Auslenkung des Griffstücks herbei zu führen. So ist die Bedienbarkeit mit einer Hand für jede Personengruppe, z. B. auch für körperlich schwache Personen, möglich, da das Lenken nicht manuell, sondern über die entsprechenden Steuerungssignale ausgeführt wird.

Eine weitere Ausführungsform sieht vor, dass der Magnetfeldsensor in der Steuerungseinheit angeordnet ist, wobei die Steuerungseinheit bevorzugt eine Hauptsteuerungsplatine ist. So kann der Messwert, der durch den Magnetfeldsensor erfasst wird, unmittelbar in der Steuerungseinheit verwertet werden. Auf zusätzliche verkabelte oder kabellose Signalübertragungseinheiten kann dann verzichtet werden. In einer besonders bevorzugten Ausführungsform ist die Steuerungseinheit bzw. Hauptsteuerungsplatine in einem Abschnitt des Führgestänges, der unter dem Griffstück zu liegen kommt, angeordnet. Wenn die Hauptsteuerungsplatine gemäß der am meisten bevorzugten Ausführungsform so angeordnet ist, dass der Magnetfeldsensor direkt unter dem Magneten liegt, wird das Zusammenwirken zwischen Magnet und Magnetfeldsensor nicht extern gestört und sie können klein und kompakt realisiert werden.

In einer weiteren Ausführungsform des erfindungsgemäßen Golftrolleys sind an dem Führgestänge zwei Federn auf einer gemeinsamen Achse angeordnet. Auf diesen Federn ist das Griffstück in Ruhelage gelagert. Als Ruhelage des Griffstücks, die gleichermaßen als Ruhelage des Magneten verstanden werden kann, wird hierin die ursprüngliche Lage verstanden, in die das Griffstück gebracht ist, wenn keine Bedien-Manipulationen durch den Benutzer daran vorgenommen werden, d. h. wenn es sich in einem Kräftegleichgewicht befindet, das sich durch die Lagerung am Führgestänge einstellt.

Gleichzeitig üben die Federn jeweils eine Rückstellkraft in Richtung der Ruhelage auf das Griffstück aus, wenn dieses aus der Ruhelage heraus bewegt, genauer translatorisch verschoben ist. Schraubendruckfedern können verwendet werden. Vorteilhaft wird in dieser Ausführungsform die Ruhelage bei Loslassen des Griffstücks eingestellt.

Durch diese Ausführungsform wir die Bedienbarkeit weiter verbessert, da die Rückstellkräfte der jeweiligen Federn dem Bediener ein haptisches Feedback über die Stärke seiner Bediensignale geben. Je stärker das Griffstück translatorisch verschoben wird, desto stärker wirken die Rückstellkräfte dem entgegen. Insbesondere bei einer quantitativen Erfassung der Auslenkung und Umsetzung in entsprechende Steuersignale wird so eine gefühlvolle Bedienung ermöglicht, indem eine stärkere Auslenkung des Griffstücks nur gegen die stärker werdenden Rückstellkräfte bewusst herbeigeführt werden kann. Die Federkräfte (Federkonstante bzw. Federrate) sind dabei so gewählt, dass ein haptisches Feedback und das Rückstellen des Griffstücks ermöglicht werden, ohne dass ein hoher Kraftaufwand für die Auslenkung des Griffstücks benötigt würde. Dies ist bspw. bei einer Federkonstante vom 1,55 N/mm gegeben.

Die eingestellte Rotation des Griffstücks hingegen und damit die Geschwindigkeit wird bevorzugt auch beim Loslassen des Griffstücks aufrechterhalten, was bspw. über eine Art Reibkupplung realisiert werden kann.

Eine weitere Ausführungsform des erfindungsgemäßen Golftrolleys sieht vor, dass die Rotationsachse, um die das Griffstück rotiert werden kann, parallel zu einer Rad-Rotationsachse des Golftrolleys angeordnet ist. Dabei wird von einer nicht ausgelenkten Rad-Rotationsachse des Rades oder der Räder (mit parallelen Rad-Rotationsachsen) des Trolleys ausgegangen. In dieser Ausführungsform kann das Griffstück also in bzw. gegen die Bewegungsrichtung des Trolleys rotiert werden, wobei intuitiv das Drehen des Griffstücks mit einer gleichartigen Drehung der Räder assoziiert wird. Alternativ ist auch denkbar, dass die Rotationsachse quer zur Rad-Rotationsachse angeordnet ist. Andere Ausrichtungen des Griffstücks und damit dessen Rotationsachse sind zwar möglich, sind jedoch weniger ergonomisch und aufgrund der weniger intuitiven Zuordnung zu Bewegungsrichtungen weniger vorteilhaft.

Gemäß einer weiteren Ausführungsform kann das Griffstück eine Rotation des Griffstücks um die Rotationsachse um einen vorbestimmten Winkel derart vollführen, dass die Rotation in der Steuerungseinheit ein Steuerungssignal für die Geschwindigkeit auslöst.

Auch die Verschiebung des Griffstücks entlang der Rotationsachse kann um eine vorbestimmte Strecke erfolgen, für die festgelegt ist, dass sie in der Steuerungseinheit ein Steuerungssignal zur Anpassung der Bewegungsrichtung auslöst.

Die Auslenkung des Griffstücks, wobei hierin unter "Auslenkung des Griffstücks" die Drehung desselben um eine Rotationsachse oder eine translatorische Verschiebung des Griffstücks entlang der Rotationsachse oder eine Addition dieser beiden Bewegungen gemeint ist, führt also zur Richtungs- und Geschwindigkeitsänderung bzw. deren Erhalt des Trolleys. In anderen Worten ist also die Rotation des Griffstücks an die Geschwindigkeit gekoppelt und ein Verschieben des Griffstücks an die Bewegungsrichtung, um den Trolley zu lenken. Es können also auch gleichzeitig Steuerungssignale an den elektromotorischen Antrieb zur Geschwindigkeitsregulation und an die Lenkung zur Anpassung der Bewegungsrichtung gesendet werden.

Bevorzugt ist die Anpassung der Bewegungsrichtung proportional zu der Auslenkung des Griffstücks, also zu der Strecke. Besonders vorteilhaft lässt sich diese Ausführungsform mit einem auf Federn gelagerten Griffstück realisieren, das eine proportional zur Auslenkung ansteigende Rückstellkraft durch die jeweilige Feder erfährt.

In einer weiteren Ausführungsform des erfindungsgemäßen Trolleys löst eine Rotation des Griffstücks um mehr als einen vorbestimmten Grenzwinkel um die Rotationsachse in Bewegungsrichtung ein Steuerungssignal zum Abbremsen des Trolleys aus. Der vorbestimmte Grenzwinkel liegt dabei bevorzugt in einem Bereich zwischen 20° und 45° und kann entweder in eine Rotationsrichtung oder aber in beide Rotationsrichtungen vorgesehen sein. Dann wird unabhängig davon, ob der Golftrolley sich in Vorwärtsfahrt oder Rückwärtsfahrt befindet, ein Bremssignal ausgelöst und der Trolley abgebremst, wenn das Griffstück "überdreht", also über den Grenzwinkel hinaus rotiert wird. Dies ist zum einen eine Sicherheitsfunktion, um ein übermäßiges Beschleunigen zu verhindern, zum anderen wird die Bedienung erleichtert, da sowohl ein Zurückdrehen in die Ruhelage als auch das Überdrehen zum Abbremsen führen, also auch der jeweils kürzere Rotationsweg für ein entsprechend schneller ausgelöstes Abbremssignal genutzt werden kann.

Damit das Griffstück sich nicht von dem Führgestänge löst, an das es nach Art eines Spazierstockgriffs angeformt sein kann, ist es gemäß einer Ausführungsform zwischen zwei an seinen jeweiligen Enden angeordneten Begrenzungselementen befestigt.

Mit "Enden" sind die beiden axial gelegenen Seiten des Griffstücks gemeint. Bei den Begrenzungselementen kann es sich bevorzugt um einstückige Begrenzungshülsen handeln, die über einen Abschnitt des Führgestänges gestülpt sind und mit diesem verbunden, z. B. verschraubt oder verbolzt sind, oder um ein- oder mehrstückige Klemmringe, die einen Abschnitt des Führgestänges umfassen und an diesem ortsfest geklemmt werden. Die translatorische Bewegung des Griffstücks wird damit auf den Bereich zwischen den Begrenzungselementen limitiert, deren Abstand daher um einen geringen Betrag, etwa wenige Millimeter, größer ist als die axiale Länge des Griffstücks.

In einer weiteren Ausführungsform weist der Golftrolley zumindest einen Taster oder Schalter auf, der an oder neben dem Griffstück angeordnet ist, wobei es sich bevorzugt um Drucktaster, besonders bevorzugt zwei Drucktaster, handelt. Diese sind dazu ausgebildet, Signale zum Aktivieren und/oder Deaktivieren des elektromotorischen Antriebs oder einer Bremse zu erfassen und zu senden. Die Taster oder Schalter sind dabei bevorzugt so angeordnet, dass sie mit der gleichen Hand, die das Griffstück fassen soll, aus dieser Griffposition erreicht werden können. Vorteilhaft wird durch den zusätzlichen Aktivierungsschalter vermieden, dass der Trolley durch versehentliches Auslenken des Griffstücks losfährt oder gelenkt wird. Nur wenn der Schalter aktiviert ist, wird die Magnetfeldänderung erfasst, in Steuerungssignale umgewandelt und der Antrieb angesteuert.

Die Taster können auch mit anderen oder zusätzlichen Funktionen belegt sein, die die durch das Griffstück angesteuerten Funktionen ergänzen, etwa neben dem Aktivieren an sich auch eine Vorlauf-Funktion, die abhängig von der Anzahl und Dauer der Tasterdrücke bspw. 10 Meter, 20 Meter oder 30 Meter Vorlauf des Golftrolleys (oder beliebige sonstige Streckenlängen) bewirken kann. Über einen zweiten Taster können Funktionen zum Freilauf des Golftrolleys, d. h. Lösen einer Feststell- oder Parkbremse während des Tasterdrucks und Schalten des elektromotorischen Antriebs in einen Freilauf-Modus, freigeschaltet werden. Ferner ist denkbar, andere Fahrmodi anzusteuern, insbesondere eine elektronische Differentialsperre, um über einen kontrollierten Gleichlauf der Räder eine stabile Geradeausfahrt auch in schwierigem Gelände, etwa auf schrägen Hängen zu ermöglichen. Bevorzugt wird, wenn ein solcher Fahrmodus aktiviert wird, die Lenksteuerung am Griffstück deaktiviert.

Die Anzahl und die Belegung der Funktionen der Taster oder Schalter kann in verschiedenen Ausführungsformen variiert werden.

Ferner kann der Golftrolley mit einer Sicherheitsabschaltung, bspw. einer Totmann-Schaltung ausgestattet sein, etwa für den Fall, dass die gehende Person stürzt. Nach einer vorbestimmten Zeit, z. B. vier Minuten, innerhalb derer keine Bediensignale registriert werden, stoppt der Golftrolley seine Bewegung.

Ein erfindungsgemäßes Verfahren zur Steuerung eines erfindungsgemäßen Golftrolleys umfasst die folgenden Schritte:
a) Drehen des Griffstücks (4) um die Rotationsachse (X) und/oder translatorisch Verschieben des Griffstücks (4) entlang der Rotationsachse (X),
b) Erfassen der hierdurch sich ergebenden Änderung des Magnetfelds des Magneten (20) durch den Magnetfeldsensor,
c) Übertragen des erfassten Messwertes an die Steuerungseinheit,
d) Bestimmen eines zu dem erfassten Messwert korrespondierenden, zuvor festgelegten Steuerungssignals durch die Auswerteeinheit der Steuerungseinheit,
e) Ansteuern des elektromotorischen Antriebs und/oder der Lenkvorrichtung des Golftrolleys mit dem in d) bestimmten Steuerungssignal, dadurch Einstellen der Geschwindigkeit und/oder der Bewegungsrichtung des Golftrolleys.

Vorteilhaft kann durch das erfindungsgemäße Verfahren ein Golftrolley, der einen Magneten in einem beweglichen Griffstück und einen nicht beweglichen Magnetfeldsensor aufweist, über eine Magnetfeldkennung angesteuert und gelenkt werden. Somit ist es vorteilhaft möglich, dass der Benutzer alle notwendigen Bedienungssignale lediglich über einen einzigen Griff an den Trolley übergibt und dafür weder ein nennenswerter Kraftaufwand noch eine starke Bewegung erforderlich ist, die gerade während des Nebenhergehens irritierend und störend auszuführen wäre.

Die Rotation des Griffstücks dient zur Geschwindigkeitsregulation. Bevorzugt bewirkt eine Rotation in Bewegungsrichtung eine Beschleunigung und eine Rotation entgegen der Bewegungsrichtung eine Beschleunigung in die Gegenrichtung der Bewegungsrichtung, d. h. eine Rotation nach vorne bewirkt eine Vorwärtsfahrt und eine Rotation nach hinten bewirkt eine Rückwärtsfahrt. Vorne und hinten sind dabei auf die übliche Bedienposition des Bedieners, der hinter dem Trolley geht und von dort aus das Griffstück fasst, bezogen und stimmen mit der Gehrichtung des Bedieners überein.

Das translatorische Verschieben des Griffstücks dient demgegenüber der Richtungsänderung. Um die Steuerung erwartungskonform zu gestalten, bewirkt ein Verschieben in Bewegungsrichtung nach links ein Ablenken nach rechts und ein Verschieben des Griffstücks in Bewegungsrichtung nach rechts ein Ablenken nach links. Links und rechts sind hier ausgehend von der Bewegungsrichtung des Trolleys und damit der Körperseite der bedienenden Person zu verstehen.

In einer weiteren Ausführungsform des Verfahrens ist als alternative Bremsart ferner vorgesehen, dass eine Rotation des Griffstücks um mehr als einen vorbestimmten Grenzwinkel aus der Ruhelage gefolgt wird vom Bestimmen eines Abbremssignals und damit weiter vom Ansteuern des elektromotorischen Antriebs mit dem Abbremssignal und dadurch Abbremsen des Golftrolleys.

Es ist denkbar, dass die Richtungsänderungsfunktion über den elektromagnetischen Antrieb ausgeübt wird, indem ein Lenksignal über unterschiedlich stark angetriebene Räder, die auf einer gemeinsamen Achse liegen, bzw. Abbremsen/Blockieren eines der Räder umgesetzt wird. Ebenso gut ist es jedoch möglich, dass das Lenksignal über eine eigens vorgesehene Lenkung der Räder bzw. Radachsen in eine Lenkbewegung gewandelt wird.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung bzw. von deren Teilen.

Dabei zeigen:
- **Flg. 1**: eine Seitenansicht eines Ausschnitts des Führgestänges des erfindungsgemäßen Golftrolleys mit Griffstück,
- **Fig. 2**: einen Abschnitt des Führgestänges des erfindungsgemäßen Golftrolleys ohne Griffstück,
- **Fig. 3**: verschiedene Detailansichten des Griffstücks **a)** in einer Frontansicht, **b)** in einer Schnittansicht entlang D-D, **c)** in einer axialen Seitenansicht und **d)** in einer Schnittansicht entlang B-B
- **Fig. 4**: den Rahmen eines erfindungsgemäßen Golftrolleys, ohne Räder, **a)** in einer Frontansicht und **b)** in einer Seitenansicht.

Die Erfindung betrifft einen Golftrolley, der über eine Magnetkennung gesteuert werden kann, sowie ein Verfahren zur Steuerung des Golftrolleys über eine Magnetkennung.

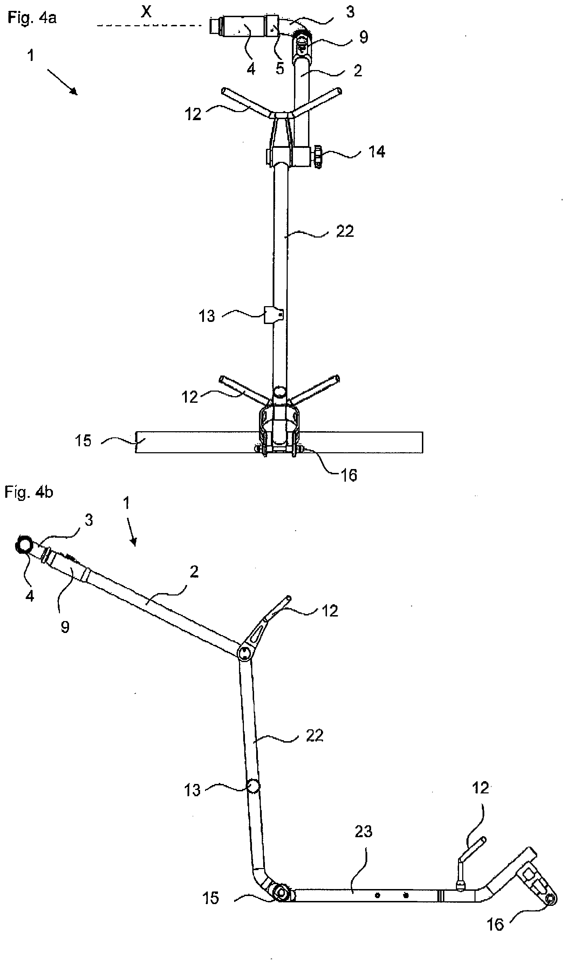

Ein ganzer Golftrolley ist in den Abbildungen nicht gezeigt; die **Fig. 4a** und **Fig. 4b** zeigen zwei Ansichten eines Rahmens 1 eines Golftrolleys mit einem Rahmen-Stützabschnitt 23, einem Rahmen-Mittelabschnitt 22 und dem Führgestänge 2. An dem Rahmen 1 eines Trolleys befinden sich entsprechend ein Vorderrad an der Vorderradachse 16 und zwei auf einer Achse 15 liegende Hinterräder. Auflagebügel 12 dienen zum Auflegen einer Golfschlägertasche (Nicht gez.); die Schenkel können die Golftasche seitlich stützen. Der Rahmen 1 kann, um bei Nichtgebrauch platzsparend aufbewahrt werden zu können, zusammenklappbar ausgeführt sein. Dazu kann das Feststellrad 14 gelöst werden und über das auf dieser Höhe angebrachte Gelenk das Führgestänge 2 entlang des Rahmen-Mittelabschnitts 22 umgeklappt angeordnet werden. Figürlich nicht gezeigt ist ein ebenso optionales zweites Gelenk mit analogem Feststellmechanismus auf Höhe der Hinterradachse 15, über das auch der Rahmen-Mittelabschnitt 22 entlang des Rahmen-Stützabschnitts 23 zusammengeklappt angeordnet werden kann.

Der Trolley ist mit einem elektromotorischen Antrieb ausgestattet (figurativ nicht gezeigt), der innerhalb der Hinterradachse 15 angeordnet oder von außen an den Rahmen angebracht sein kann. Der Antrieb kann bspw. vorteilhaft über moderne Schrittmotoren bereitgestellt werden. Es können auch mehrere Räder mit eigenen Antriebseinheiten ausgestattet sein, es müssen jedoch nicht alle Räder angetrieben sein. Über die Anschlussbuchse 13 kann der Golftrolley an eine externe Energiequelle angeschlossen werden, um die Batterie (Akku) für den elektromotorischen Antrieb aufzuladen oder um einen zweiten Akku als zusätzliche Energiequelle nutzen zu können, wodurch die Leistung erhöht oder die Zeit bis zum nächsten Aufladen verlängert wird.

Das Führgestänge 2 erstreckt sich als Teil des Rahmens 1 oberhalb des oberen Auflagebügels 12 und weist ein Bedienfeld 9 sowie als oberes Ende eine Griffstange 3 auf. An der Griffstange 3 des Führgestänges 2 ist ein Griffstück 4 angeordnet.

Zusätzlich zu der dargestellten Ausführungsform ist es auch denkbar, dass das Führgestänge einen geschlossenen Bügel bildet und sich demnach von dem Griffstück 4 ausgehend in beide Richtungen fortsetzt, um sich an einem tiefer sitzenden Punkt an den weiteren Rahmenkomponenten zu vereinigen. Auch diese Ausführungsform ist erfindungsgemäß.

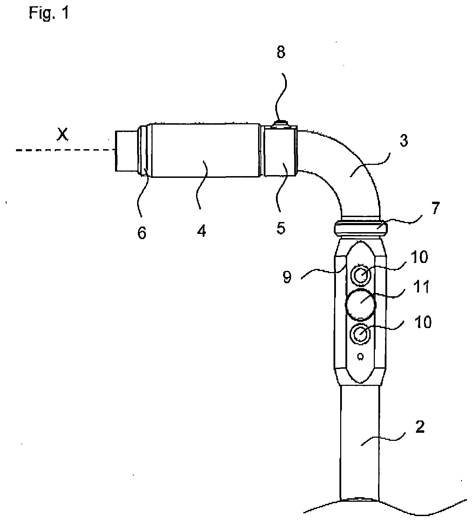

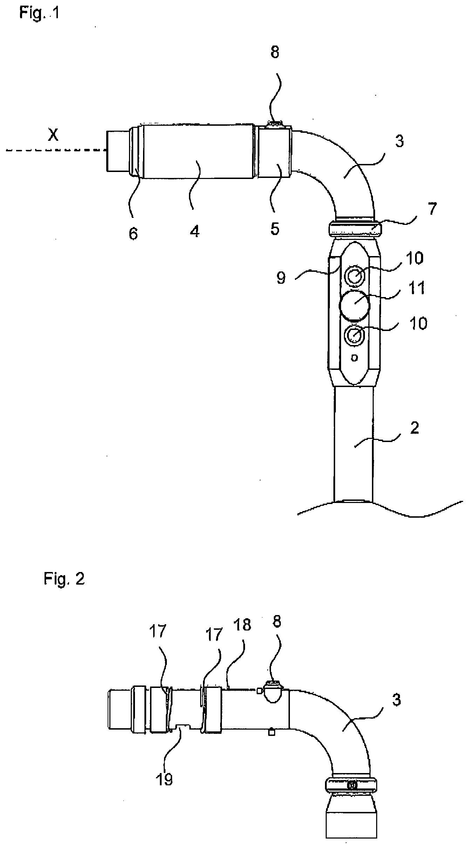

In **Fig. 1** ist der obere Abschnitt des Führgestänges 2 in einer Detailansicht dargestellt. Das Bedienfeld 9 weist mehrere Schalter auf, beispielhaft sind zwei Druckschalter 10 und ein Drehschalter 11 gezeigt, Diese können für einen alternativen Betriebsmodus, bei dem der Trolley selbstständig fährt, zur Einstellung von Fahrgeschwindigkeit und Fahrdistanz dienen. Sie können aber auch mit nebengeordneten Funktionen, bspw. zum Einstellen von Beleuchtung, belegt sein. Da sowohl die Geschwindigkeits- als auch die Richtungsregulation jedoch über das Griffstück 4 ausgeführt werden können, kann ein solches Bedienfeld 9 bzw. Schalter 10, 11 auch vollständig entfallen.

Das obere Ende des Führgestänges 2 ist als Griffstange 3 ausgebildet, die um einen 90°-Winkel seitlich abgewinkelt ist und an der das Griffstück 4 angebracht ist. Die Griffstange 3 ist derart abgewinkelt, dass der obere, abgewinkelte, das Griffstück 4 tragende Abschnitt parallel zur Hinterradachse 15 des Rahmens 1 und damit orthogonal zu einer Bewegungsrichtung des Trolleys ausgerichtet ist. Dabei ist die Griffstange 3 als eigenes Bauteil (vgl. **Fig. 2**) ausgeformt und über einen zweiteiligen Abschlussring 7 an dem übrigen Führgestänge 2 befestigt. Selbstverständlich sind andere Verbindungsarten ebenso wie eine einstückige Ausführung des Führgestänges 2 mit gerader oder abgewinkelter Griffstange 3 alternativ möglich.

In **Fig. 2** ist die Griffstange 3 ohne Griffstück 4 gezeigt; dies bedeutet nicht, dass das Griffstück 4 demontiert werden können muss, die Ansicht dient lediglich der Veranschaulichung der Komponenten, die zur Lagerung des Griffstücks 4 im montierten Endzustand von diesem verdeckt sind. Zwei Federn 17 sind um die Griffstange 3 einander gegenüberliegend um die Mittelachse der Griffstange 3 (abgewinkelter Abschnitt) angeordnet. Die Federn 17 können als Zug- oder Druckfedern realisiert sein und bewirken, dass das Griffstück, wenn es auf den Federn 17 aufgesetzt ist, translatorisch entlang der Rotationsachse X verschiebbar ist. Außerdem üben die Federn, wenn das Griffstück 4 ausgelenkt und die Federn entsprechend gestreckt oder gestaucht sind, eine Rückstellkraft auf das Griffstück 4 aus, sodass dieses in seine Ruhelage zurückkehrt, wenn keine auslenkende Kraft darauf wirkt, und die Ruhelage als Ausgangsposition hergestellt wird. Am Beispiel von Druckfedern 17 bedeutet dies also, dass bei Verschieben des Griffstücks 4 aus der Ruhelage heraus eine der beiden Federn 17 gestaucht wird und, um sich wieder zu strecken, das Griffstück 4 wieder in die Ruhelage zurückschiebt, während die andere Feder analog bei einem Verschieben in die entgegengesetzte Richtung die Rückstellkraft bereitstellt. Dabei sind die Federstärken so gewählt, dass nur eine sehr geringe Kraft für deren Verformung nötig ist.

Das Griffstück 4 kann um die Rotationsachse X gedreht werden, die der Mittelachse des abgewinkelten Abschnitts des Führgestänges 2 bzw. dessen Griffstange 3 entspricht und damit zugleich der Mittelachse des röhrenförmigen Griffstücks 4. Eine weitere Feder 18, in der eine Kugel drehbar gelagert ist, bildet hier einen weiteren Auflagepunkt für das Griffstück. Diese weitere Feder 18 und die Kugel dienen dazu, einen Nullpunkt für die Geschwindigkeitsregelung sowohl mechanisch festzulegen als auch haptisch spürbar zu machen. Bei Überdrehung des Griffstücks 4 um die Rotationsachse X kann ein Umschalten in den Rückwärtsgang ausgelöst werden.

Bewegbarkeit des Griffstücks 4 ist somit um die und entlang der Rotationsachse X gegeben. Eine Bewegung, die mit einer Veränderung der axialen Ausrichtung des Griffstücks 4 oder der Lage der Mittelachse des Griffstücks 4 einher geht, also ein Verkippen oder ein Verschieben quer zur Rotationsachse X, ist hingegen nicht vorgesehen und höchstens in geringem Maße, technisch bedingt durch die bewegbare Lagerung für die vorgesehenen Auslenkungen, möglich.

Es ist möglich, dass an dem Golftrolley weitere Griffe, die nicht die Funktion des Griffstücks 4 aufweisen müssen, angeordnet sind, etwa einen Griff für die zweite Hand, der zusätzlichen Halt bietet.

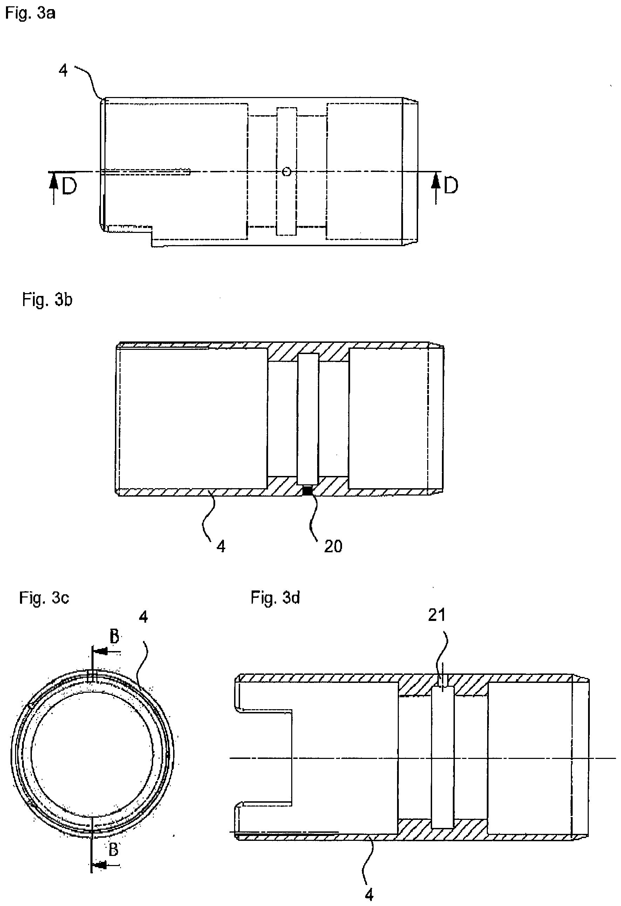

Das Griffstück 4 ist hier in Ruhelage ("Nullposition"), von der aus die Auslenkung in Rotationsrichtung um einen bestimmten Winkel oder in translatorischer Richtung um eine bestimmte Strecke vorgenommen und von einem Magnetfeldsensor (nicht gezeigt) bestimmt wird. Um die Auslenkung des Griffstücks 4 ohne elektrische Verbindungen bestimmen zu können, ist in dem Griffstück ein Magnet 20 angeordnet, wie in der Schnittansicht des Griffstücks 4 in **Fig. 3b** gezeigt. Es handelt sich um einen Permanentmagneten mit geringen Abmessungen und geringem Gewicht, sodass die Ergonomie des Griffs nicht negativ beeinflusst wird.

In der Schnittansicht in **Fig. 3d** ist das Griffstück 4 ohne Magnet 20 gezeigt, es ist aber eine Aussparung 21 vorhanden, in die der Magnet 20 eingesetzt wird. Das Griffstück kann auch direkt mit integriertem Magneten 20 gefertigt werden. Das Griffstück 4 (vgl. **Fig. 3a** bis **3d**) ist als Röhrenstück (und folglich innen hohl) ausgebildet, mit etwa kreisförmigem Querschnitt (**Fig. 3c**), sodass es passgenau auf das Führgestänge 2 aufgesetzt werden kann. Der Mantel des Griffstücks 4 muss, wie in **Fig. 3d** zu erkennen ist, nicht durchgängig sein, sondern kann Ausnehmungen aufweisen, um etwas Flexibilität beim Aufsetzen auf und Befestigen am Führgestänge 2 zu bieten. Die Außenkontur des Griffstücks kann anders als gezeigt geformt sein.

Als Gegenstück zum Magneten 20 des Griffstücks 4 weist das Führgestänge 2 vorzugsweise dem Magneten 20 bei montiertem Griffstück 4 in Ruhelage unmittelbar gegenüberliegend einen Magnetfeldsensor auf. Dieser kann bspw. in dem in **Fig. 2** gezeigten Sitz 19 für den Magnetfeldsensor so angeordnet sein, dass er von dem Griffstück 4 überdeckt ist und die Stelle des Griffstücks 4, an der der Magnet 20 sitzt, nicht nur in Ruhelage, sondern auch beim Auslenken des Griffstücks 4 sich stets benachbart zu dem Magnetfeldsensor befindet. So wird das Magnetfeld des Magneten 20 nicht durch andere Bauteile geschwächt. Der Magnetfeldsensor registriert Änderungen des Magnetfeldes des Magneten 20, wenn dieser, bedingt durch eine Bewegung des Griffstücks 4, ebenfalls in seiner Position bewegt wird und somit eine Relativbewegung zwischen Magnet 20 und Magnetfeldsensor vorliegt. Hierbei können bereits geringe Lageveränderungen im einstelligen Millimeter-Bereich als Bediensignal wirken, die erfasst und in der Steuerungseinheit, hier einer Steuerungsplatine, des Golftrolleys ausgewertet und umgesetzt werden.

In der Steuerungseinheit, die an einem beliebigen Teil des Rahmens 1 angeordnet sein kann, hier aber (**figurativ** nicht gezeigt) an dem unter dem Griffstück 4 zu liegen kommenden Abschnitt des Führgestänges 2, z. B. innerhalb des Rohrs des abgewinkelten Abschnitts der Griffstange 3, angeordnet ist, ist eine Auswerteeinheit umfasst, die bestimmte Steuerungssignale in Abhängigkeit von der über Magnetfeldkennung erfassten Auslenkung des Griffstücks 4 bestimmt. Dabei kann ein bestimmter Winkel, um den das Griffstück 4 um die Rotationsachse rotiert ist, mit einer bestimmten Geschwindigkeit assoziiert sein, wobei die Steuerungseinheit die notwenigen Steuerungssignale zum Einstellen dieser Geschwindigkeit des Trolleys an den elektromotorischen Antrieb überträgt. Dies gilt für die Rotation in beide Richtungen, wobei die Geschwindigkeit in Rotationsrichtung für eine Vorwärts- bzw. Rückwärtsfahrt eingestellt wird. Dabei gilt: Je größer der Winkel, desto höher die zu erreichende Geschwindigkeit. Alternativ könnte durch Rotation des Griffstücks nur zwischen Vorwärts- und Rückwärtsfahrt unterschieden werden, die Geschwindigkeit also unabhängig vom Betrag des Winkels gesetzt werden. Eine bestimmte Strecke, um die das Griffstück entlang der Rotationsachse verschoben ist, kann in eine Lenkbewegung für eine Richtungsänderung umgesetzt werden, wobei die Steuerungseinheit den Antrieb bzw. die Lenkung mit den von der Auswerteeinheit ermittelten Signalen ansteuert. Auch hierbei kann die Richtungsänderung umso stärker sein, je größer die ausgelenkte Strecke ist. Zumindest wird jedoch in Auslenkungen nach rechts oder links des Trolleys, was der Benutzersicht entspricht, wenn dieser hinter dem Trolley steht bzw. geht, unterschieden und die Richtungsänderung bevorzugt nach links oder rechts dementsprechend ausgelöst. Bevorzugt wird die Lenkung also so angesteuert, als ob mit der Lenkbewegung am Griffstück 4 der gesamte Golftrolley manuell gedreht werden würde.

Es ist nicht ausgeschlossen, dass die Rotation bzw. Translation des Griffstücks 4 mit anderen als den oben beschriebenen Steuerungssignalen verknüpft werden, bes. wenn diese bspw. bei einer anderen Orientierung der Griffstange 3 und des Griffstücks 4 eher den Erwartungen des Bedieners an eine einfache, selbsterklärende Bedienung entsprechen.

Damit das Griffstück 4 nicht von dem Führgestänge 2 rutscht und um nicht mehr als die für die Auslenkung notwendigen wenigen Millimeter - ein Bereich von etwa 5 mm bis 8 mm je Richtung hat sich, ohne zwingend gelten zu müssen, als günstig erwiesen - verschoben werden kann, ist an seinem ersten Ende, das in die Richtung weist, in der sich das Führgestänge 2 fortsetzt, eine Begrenzungshülse 5 angebracht. In der Begrenzungshülse 5 ist außerdem ein Drucktaster 8 aufgenommen, der bspw. zur Aktivierung und Deaktivierung des gesamten Trolleys, insbesondere dessen Antriebs bedient werden kann. Ein zweiter (nicht zu sehen) Drucktaster (Taster könnten auch Schalter sein) kann gegenüber des Drucktasters 8 oder an einer anderen Stelle nahe am Griffstück 4 angeordnet sein und bspw. eine Freilauf-Funktion des Golftrolleys aktivieren, also eine Bremsfunktion gezielt deaktivieren. Zum zweiten Ende des Griffstücks 4, das zum freien Ende des Führgestänges 2 bzw. der Griffstange 3 weist, ist ein Klemmring 6 angeordnet, der nach Montage des Griffstücks 4 über die Griffstange 3 gestülpt werden kann.

Der Golftrolley kann gesteuert werden, indem ein Golfspieler seine Golftasche zwischen die Haltebügel 12 des Trolleys stellt und sichert und dann das Griffstück 4 greift, das sich in Ruhelage befindet, den Antrieb und die Steuerung mit einem Druck auf den Drucktaster 8 aktiviert, um eine Vorwärtsrotation (in der Ansicht des Rahmens 1 des Trolleys in **Fig. 4b** entspräche dies einer Rotation im Uhrzeigersinn) des Griffstücks 4 mit Magnet 20 zu bewirken. Diese wird erfasst und als Signal zum Vorwärtsfahren an den Antrieb übermittelt; der Trolley fährt los. Rückwärtsfahrt erfolgt analog. Ger Golfer bremst den Trolley durch Überdrehen oder durch Zurückdrehen auf einen Rotationswinkel von 0°. Um nach rechts oder links abzubiegen, muss er nur das Griffstück 4 in die gewünschte Richtung verschieben. Die erfasste Lage des Magneten 20 im Griffstück 4 wird in eine zur Auslenkung korrespondierend starke Lenkbewegung umgesetzt. Ist die gewünschte Richtung eingestellt, verringert der Golferden Druck auf den Griff 4 nach rechts oder links, sodass das Griffstück 4 in die mittlere Position zurückkehrt und keine Lenkbewegung mehr signalisiert wird. Dann wird wieder Geradeausfahrt oder Stillstand, wenn das Griffstück komplett in Ruhelage zurückkehrt, ausgelöst.

### BEZUGSZEICHENLISTE

- 1: Rahmen
- 2: Führgestänge
- 3: Griffstange
- 4: Griffstück
- 5: Begrenzungshülse
- 6: Klemmring
- 7: Abschlussring
- 8: Drucktaster
- 9: Bedienfeld
- 10: Druckschalter
- 11: Drehschalter
- 12: Auflagebügel
- 13: Anschlussbuchse
- 14: Feststellrad
- 15: Hinterradachse
- 16: Vorderradachse
- 17: Feder
- 18: weitere Feder
- 19: Sitz für Magnetfeldsensor
- 20: Magnet
- 21: Aussparung
- 22: Rahmen-Mittelabschnitt
- 23: Rahmen-Stützabschnitt
- X: Rotationsachse

## Patentansprüche

1. Elektromotorisch angetriebener Golftrolley, der
- eine Lenkvorrichtung aufweist, die mit einem Führgestänge (2), an dem ein Griffstück (4) um eine Rotationsachse (X) drehbar und entlang der Rotationsachse (X) translatorisch verschiebbar angeordnet ist, gekoppelt ist, und
- eine Steuerungseinheit zur Steuerung des elektromotorischen Antriebs, die mit der Lenkvorrichtung operativ gekoppelt ist,
aufweist,
**dadurch gekennzeichnet, dass**
mit dem Griffstück (4) ein Magnet (20) unbeweglich verbunden ist,
wobei das Führgestänge (2) einen Magnetfeldsensor aufweist, der dazu ausgebildet ist, eine Drehung um die Rotationsachse (X) und/oder eine translatorische Verschiebung entlang der Rotationsachse (X) des Griffstücks (4) über eine örtliche Änderung eines Magnetfeldes des Magneten (20) quantitativ zu erfassen und an die Steuerungseinheit zu übertragen,
wobei die Steuerungseinheit eine Auswerteeinheit aufweist, in der zu der erfassten Drehung und/oder translatorischen Verschiebung des Griffstücks (4) korrespondierende Steuerungssignale festgelegt sind.

2. Golftrolley nach Anspruch 1,
**dadurch gekennzeichnet, dass**
der Magnetfeldsensor in der Steuerungseinheit angeordnet ist, wobei bevorzugt die Steuerungseinheit eine Hauptsteuerungsplatine ist, die besonders bevorzugt in einem Abschnitt des Führgestänges (2), der unter dem Griffstück (4) zu liegen kommt, angeordnet ist, und die am meisten bevorzugt so angeordnet ist, dass der Magnetfeldsensor direkt unter dem Magneten (20) liegt.

3. Golftrolley nach Anspruch 1 oder 2,
**dadurch gekennzeichnet, dass**
an dem Führgestänge (2) auf einer gemeinsamen Achse zwei Federn (17), bevorzug Schraubendruckfedern (17), angeordnet sind, auf denen das Griffstück (4) gelagert ist, wobei die Federn (17) jeweils eine Rückstellkraft in Richtung einer Ruhelage des Griffstücks (4) auf das Griffstück (4) ausüben, wenn das Griffstück (4) aus der Ruhelage heraus bewegt ist.

4. Golftrolley nach zumindest einem der Ansprüche 1 bis 3,
**dadurch gekennzeichnet, dass**
die Rotationsachse (X) quer zu der Bewegungsrichtung des Golftrolleys ausgerichtet ist.

5. Golftrolley nach zumindest einem der Ansprüche 1 bis 4,
**dadurch gekennzeichnet, dass**
die Drehung des Griffstücks (4)
- um die Rotationsachse (X) einen Drehwinkel beschreibt, der in der Steuerungseinheit ein Steuerungssignal für eine Fahrgeschwindigkeit des Golftrolleys auslöst und/oder
- dass die Verschiebung des Griffstücks (4) um eine Strecke erfolgt, die in der Steuerungseinheit ein Steuerungssignal zur Anpassung einer Bewegungsrichtung des Golftrolleys auslöst,
wobei die Geschwindigkeit umso größer ist, je größer der Drehwinkel ist und wobei die Änderung der Bewegungsrichtung umso größer ist, je größer die Strecke ist, und wobei bevorzugt die Änderung der Bewegungsrichtung proportional zu der Auslenkung des Griffstücks (4) erfolgt.

6. Golftrolley nach Anspruch 5,
**dadurch gekennzeichnet, dass**
eine Rotation des Griffstücks (4) aus der Ruhelage um mehr als einen vorbestimmten Grenzwinkel um die Rotationsachse (X) in Bewegungsrichtung ein Steuerungssignal zum Abbremsen des Golftrolleys auslöst.

7. Golftrolley nach zumindest einem der Ansprüche 1 bis 6,
**dadurch gekennzeichnet, dass**
das Griffstück (4) an dem Führgestänge (2) zwischen zwei Begrenzungselementen, die jeweils an seinen beiden Enden angeordnet sind, angeordnet ist, wobei die Begrenzungselemente bevorzugt eine Begrenzungshülse (5) und einem Klemmring (6) sind.

8. Golftrolley nach zumindest einem der Ansprüche 1 bis 7,
**dadurch gekennzeichnet, dass**
an oder neben dem Griffstück (4) zumindest ein Taster (8) oder Schalter (8), bevorzugt ein Drucktaster (8) angeordnet ist, der mit der Steuereinheit operativ gekoppelt ist und dazu ausgebildet ist, Signale zum Aktivieren und/oder Deaktivieren des elektromotorischen Antriebs und/oder einer Bremse des Golftrolleys zu erfassen und zu senden.

9. Verfahren zur Steuerung eines Golftrolleys nach zumindest einem der Ansprüche 1 bis 7.
**umfassend die Schritte**
a) Drehen des Griffstücks (4) um die Rotationsachse (X) und/oder translatorisch Verschieben des Griffstücks (4) entlang der Rotationsachse (X),
b) Erfassen der hierdurch sich ergebenden Änderung des Magnetfelds des Magneten (20) durch den Magnetfeldsensor,
c) Übertragen des erfassten Messwertes an die Steuerungseinheit,
d) Bestimmen eines zu dem erfassten Messwert korrespondierenden, zuvor festgelegten Steuerungssignals durch die Auswerteeinheit der Steuerungseinheit,
e) Ansteuern des elektromotorischen Antriebs und/oder der Lenkvorrichtung des Golftrolleys mit dem in d) bestimmten Steuerungssignal, dadurch Einstellen der Geschwindigkeit und/oder der Bewegungsrichtung des Golftrolleys.
